# EUROPEAN PATENT SPECIFICATION

(11) **EP 3 859 503 B1**
(45) Date of publication and mention of the grant of the patent: **17.09.2025**
(21) Application number: 20155164.5
(22) Date of filing: 03.02.2020
(51) Int. Cl.: G06F 3/04842, G06F 3/041, G06F 3/04817

(54) **SELECTION OF REMOTE OBJECTS**
AUSWAHL VON ENTFERNTEN OBJEKTEN
SÉLECTION D'OBJETS DISTANTS

(43) Date of publication of application: 04.08.2021
(73) Proprietor: Evolution Malta Ltd, Sliema, TPO 0001 (MT)
(72) Inventor: GEIMANEN, Jevgeni, 61715 Tartumaa, Tartu (EE)
(74) Representative: Zacco Sweden AB

(56) References cited:
- WO-A1-2018/152437
- US-A1- 2016 133 052
- US-A1- 2016 147 498

## Description

### Technical field

The present invention relates to system, methods and arrangements for selecting objects and in particular for selecting objects on a remote display using a user electronic device.

### Background

As more and more content, trade, and even social interaction move into the digital arena many new applications are being developed to enhance the user experience. Furthermore, as we move towards digital solutions trust issues will become of increased importance. If you as a user interact with a software solution there can always be a risk that the software is programmed to deliver content and solutions that are biased in view of the expectations and to the benefit of the content provider.

This is for instance a highly relevant issue relating to areas that depends on some kind of random generator; there is often a risk that these type of solutions will be interpreted as being biased towards the service provider's benefit. One such technology area can for instance be seen in the gaming industry, such as online casinos providing randomized games such as roulette, card games, crap games, and so on. For this purpose, parts of the online gaming industry combine digital and real-world experience by filming actual casino games with real people as service providers at the casino game tables and providing the user a possibility to interact with real-life games digitally and remotely. Thus, the user will be provided with a gaming experience environment as if he or she were present in the casino and with the same randomness as a live casino experience from home or on a mobile user device.

The same holds true for other areas where the users interact with the digital world, combining digital and live real-world content can provide an enhanced experience and improved user-machine interaction. Furthermore, behavioral studies show that by gamifying tasks, users will be more efficient in performing the tasks since level of satisfaction and acknowledgement increases. Thus, there exists a need for improving human-machine interactions and increasing trust of digital solutions.

WO 2018/152437 A1 discloses systems and methods for enabling a consumer of streaming video to obtain different views of the video, such as zoomed views of one or more objects of interest. In an exemplary embodiment, a client device receives an original video stream along with data identifying objects of interest and their spatial locations within the original video. In one embodiment, in response to user selection of an object of interest, the client device switches to display of a cropped and scaled version of the original video to present a zoomed video of the object of interest. The zoomed video tracks the selected object even as the position of the selected object changes with respect to the original video. In some embodiments, the object of interest and the appropriate zoom factor are both selected with a single expanding-pinch gesture on a touch screen.

### Summary

It is therefore an object to obviate at least some of the above disadvantages and provide improved devices and methods for improving the user experience.

The present invention is disclosed by the subject-matter of the independent claims. One aspect of the present invention is a method as defined in independent claim 1. Other aspects of the invention are an electronic device, computer readable storage medium, and system in independent claims 13 to 14 respectively. Further aspects of the invention are the subject of the dependent claims. Any reference throughout this disclosure to an embodiment may point to alternative aspects relating to the invention, which are not necessarily embodiments encompassed by the claims, rather examples and technical descriptions useful for understanding the invention. The scope of present invention is defined by the claims.

This is provided in a number of embodiments, such as a method for selecting objects displayed on a remote display. The method comprising, at a user electronic device having one or more processors, at least one memory, user display, and at least one user input device providing user input coordinates and events, displaying a video stream of the remote display in a remote display window on the user display, detecting a user interface input coordinate and if the user input coordinate is located in the remote display window, displaying a user selection affordance comprising a focus area overlaid over the video stream, obtaining a position of the focus area in relation to the video stream area; displaying in the focus area a virtual rendering of the remote display corresponding to the area under the focus area, receiving a user selection event from the user input device, determining the current location of the focus area in relation to the video stream; and if an object is located at the current location of the focus area, selecting the object displayed at the current location of the video stream.

The focus area may depicted as a virtual sniper scope. Furthermore, the focus area may display an enlarged portion of the remote display corresponding to the location of the focus area, i.e. providing a zoom functionality.

In the method, the electronic device may be arranged to display a video stream that has been obtained by recording the remote display using an external video recording device.

The objects may be stationary or non-stationary in the video stream during selection period or before the selection period.

The method may further comprise a step of presenting a reward when an object has been selected. Presenting the reward may comprise changing the symbol of the object to alert the user of the selection.

The method may further comprise receiving information about all objects on the remote screen from the server device, wherein the information about all objects comprise at least one of position, type of object, and reward associated with the object.

The method may further comprise steps, in the user electronic device, of analysing the video stream, determining image data related to the current position of the focus area, and creating the virtual rendering of the remote display corresponding to the area under the focus area.

Another aspect of the present invention is provided, an electronic device comprising a display, at least one user input device, one or more processors, at least one memory, and one or more programs, stored in the memory, to be executed by the one or more processors, the one or more programs including instruction sets for performing the method as defined in claims 1 to 12.

Yet another aspect of the present invention is provided, a computer readable storage medium storing one or more programs, the one or more programs comprising instruction sets for performing the method as defined in claims 1 to 12.

Furthermore, a system is provided for selecting objects at a display at a remote location using a user electronic device. The system comprising a remote display presenting objects to be selected, a camera recording a video stream of the remote display, a server obtaining the video stream and providing the video stream to user electronic devices, a user electronic device comprising one or more processors, at least one memory, a communication interface, a display, and at least one user input device. The processor of the user electronic device is arranged to operate instructions sets stored in the memory for displaying the video stream and detecting user input events from the at least one user input device, and further arranged to operate the method as defined in claims 1 to 12.

The proposed solution makes it possible to achieve a more efficient human-machine interaction. This also provides an efficient way of interacting with the user on all types of devices for instance by making efficient use of a user electronic device display. By providing an efficient interaction interface, the user will be less prone to making mistakes and operate the electronic device more efficiently. This in turn reduce battery consumption. Furthermore, the proposed solution provide a solution for enhancing the overall efficiency in solving particular tasks by gamifying the tasks.

### Brief description of the drawings

In the following the invention will be described in a non-limiting way and in more detail with reference to exemplary embodiments illustrated in the enclosed drawings, in which:
- Fig. 1: is a schematic block diagram illustrating an example system;
- Fig. 2: is a schematic block diagram illustrating an exemplary electronic device;
- Fig. 3: is a schematic block diagram illustrating an exemplary server device;
- Figs 4a, b: are schematic diagrams illustrating an exemplary user interface;
- Fig. 5: is a schematic block diagram illustrating an exemplary method in an electronic device;
- Fig. 6: is a schematic block diagram illustrating an exemplary method in a server; and
- Fig. 7: is a schematic diagram illustrating exemplary user interfaces.

### Detailed description

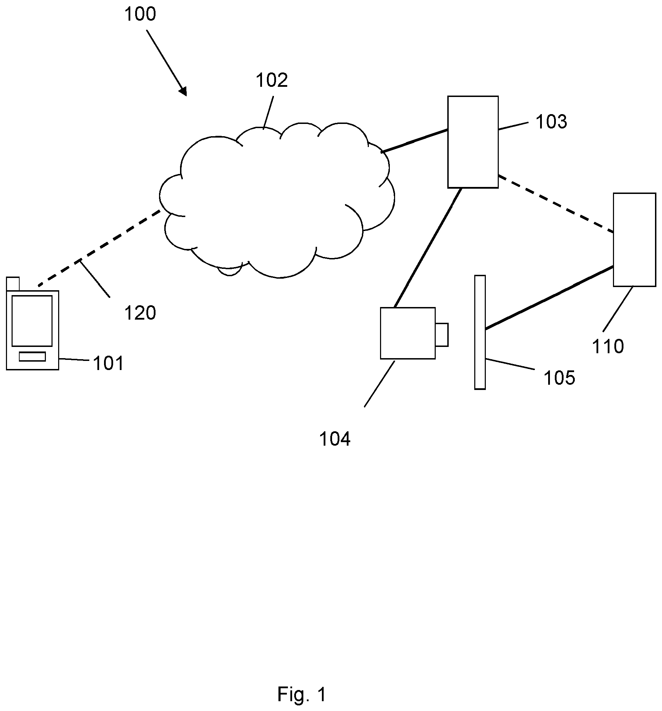

In Fig. 1 reference numeral 100 generally denotes a system for, in a user electronic device 101, selecting an object on a remote display 105. The user device is connected to a server device 103 via a remote communication link 120 and network 102. The connection 120 between the user electronic device and the network may be a wireless communication link or a wired communication link. The network may for instance be a public network such as the Internet or a private network such as an intranet. The remote display can be recorded using an external camera 104 arranged to obtain a video stream and to provide the video stream to the server device. The camera may be arranged to record a larger area then just the remote display, for instance a surrounding studio (not shown) with people and other props being part of the video recorded. The camera can for instance be a dedicated video camera, a DSLR camera with video capabilities, a mirrorless camera with video capabilities, or any other type of image recording device capable of recording video sequences for instance using CMOS or CCD chips. The remote display is controlled by a display control device 110 generating images or controlling features of the remote display for generating images on the remote display. The display control device may operate independently or optionally be controlled by or incorporated into the server device 103.

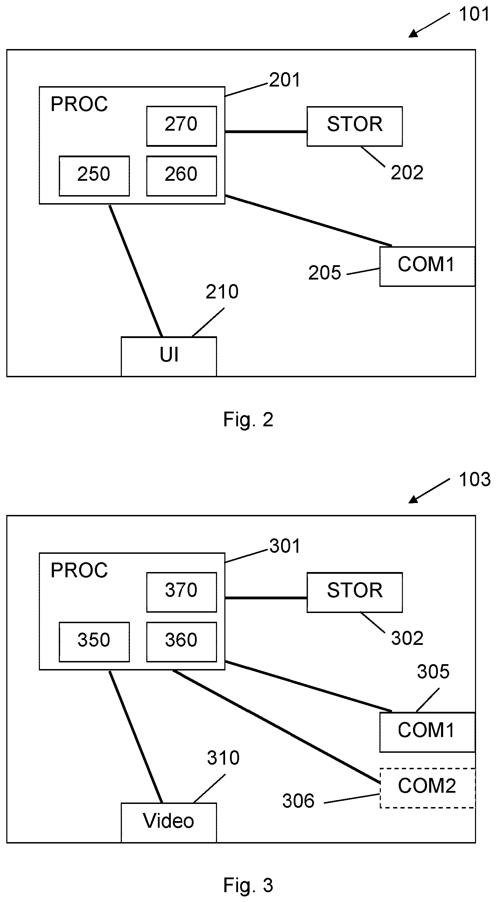

As shown in Fig. 2, the user electronic device comprise at least one processor 201, at least one memory 202, at least one communication interface 205, and at least one peripherals interface 210 for controlling user input events and display information. The processor comprise software or hardware modules for operating different functions such as a user input interface control module 250, a communication control module 260, and an application run-time module 270. The application run-time module is arranged to run instruction sets for operating different applications such as games, mail programs, browsers, and so on. The application module is arranged to run software for receiving the video stream from the server device and for selecting objects on the remote display. The user input interface control module 250 is arranged to handle user interface events, such as controlling a display of the user device, receive signals from a user input device recording keystrokes or other inputs from the user. The user interface device may for instance comprise peripherals such as a mouse, an electronic pen, a keyboard or numerical pad, or internal input devices, for instance a touch-sensitive surface such as a trackpad or touch-sensitive display 402, or a combination of different user input devices.

The proposed solution is designed to be flexible for adoption to any location of stream elements on the stream itself. UI elements are being moved, scaled and transformed, using configurational variables, which are actual for particular video stream, produced by camera located in a physical studio located remotely from the user device. The analysis and any transformations of the video stream may be executed by instruction sets in the processor of the user electronic device. The user electronic device may do all or some of the calculations on the user device to scale up/down the video stream, and relocate the UI elements (focus area) depending on user device or game stages.

The server device 103 is shown in Fig. 3 and comprise at least one processor 301, at least one memory 302, at least one communication interface 305, and at least one interface 310 for receiving a video stream from a video camera. Furthermore, the server device may optionally comprise a second communication interface 306 for communicating with the display control device 110 for controlling the remote display 105. The processor comprise modules for operating different functions such as a user control module 350, a communication control module 360, and an application run-time module 370. The application run-time module is arranged to run instruction sets for operating different applications such as for instance functions for providing the video stream to user devices communicating via a network 102 with the server device.

The processors used in the user electronic device and server device may for instance comprise microprocessors such as a central processing unit (CPU), application specific integrated circuits (ASIC), digital signal processors (DSP), field programmable gate arrays (FPGA), graphics processing unit (GPU), or any other processing device for running instruction sets for operating different software functions, or a combination of these processors. The memory may be a volatile or non-volatile memory type and of transitory or non-transitory type. For instance the memory may comprise a random access memory (RAM) of any suitable type, solid state memory types, flash memory, magnetic disk storage devices. Access to memory by other components of the device, such as CPUs is optionally controlled by a memory controller (not shown). Peripherals interface of the user electronic device can be used to couple input and output peripherals of the device to CPUs 201and memory 202. The one or more processors may run or execute various software programs and/or sets of instructions stored in memory to perform various functions for the device 101, 103 and to process and/or store data related to the operation of the device(s).

In some embodiments, the user electronic device is a desktop computer. In some embodiments, the device is portable (e.g., a notebook computer, tablet computer, personal digital assistant (PDA), or handheld device such as a mobile phone or smartphone). In some embodiments, the device is a personal electronic device (e.g., a wearable electronic device, such as a watch). In some embodiments, the device has a touchpad. In some embodiments, the device has a touch-sensitive display (also known as a "touch screen" or "touch-screen display"). In some embodiments, the device has a graphical user interface (GUI), one or more processors, memory and one or more modules, programs or sets of instructions stored in the memory for performing multiple functions.

The user electronic device may be wirelessly connected to a network 102. The wireless communication optionally uses any of a plurality of communications standards, protocols and technologies, including but not limited to ETSI based cellular communication standards as for instance Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), 5G and NR protocols, near field communication (NFC), wideband code division multiple access (W-CDMA), code division multiple access (CDMA), time division multiple access (TDMA), Bluetooth, IEEE based communication protocols such as for instance Wireless Fidelity (Wi-Fi) (e.g., IEEE 802.11a, IEEE 802.11ac, IEEE 802.11ax, IEEE 802.11b, IEEE 802.11g and/or IEEE 802.11n), or voice over Internet Protocol (VoIP), Wi-MAX. It should be noted that other communication protocols may be used, including communication protocols not yet developed. In case of a wired communication link, the communication protocol may for instance be an Ethernet link, an optical fibre, or other suitable physical links.

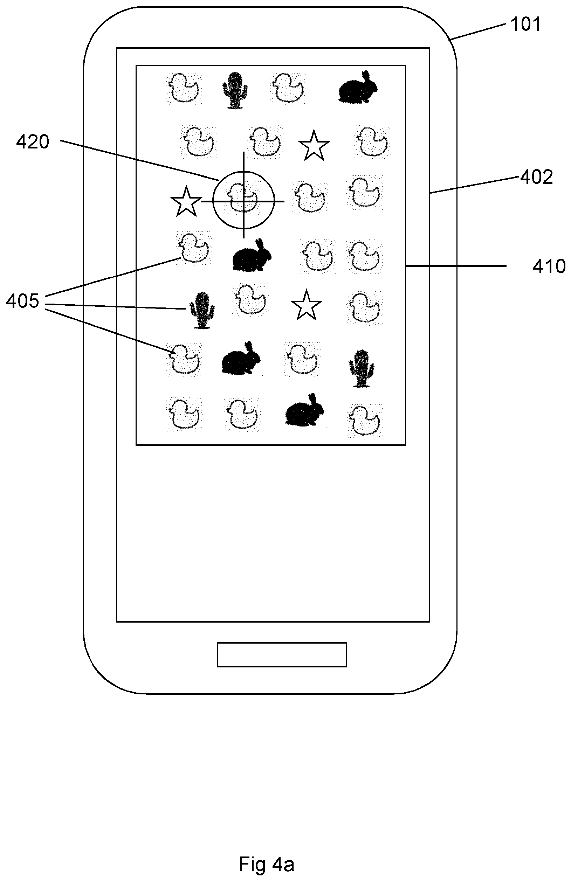

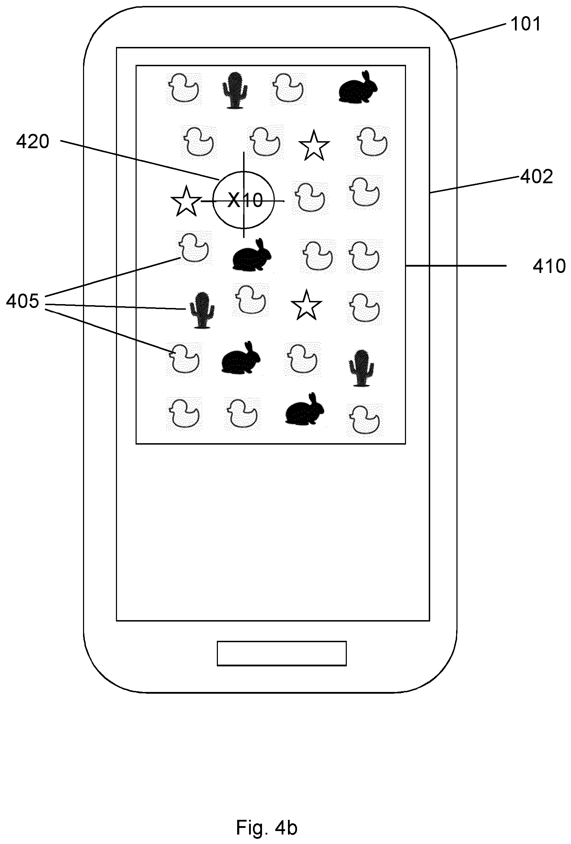

Fig. 4 shows an electronic user device 101 according to the present invention with a display 402 for interacting with the user. The display may be a touch-sensitive display providing an input and output interface between the user and the device. Alternatively, some other user input device may be connected to the user electronic device, such as, but limited to, a mouse, trackpad, joystick, or similar input devices. A pointer on the display of the user electronic device coordinates with the input device handling of the user, e.g. if the user moves the mouse, finger on a trackpad or likewise, the pointer moves in relation to this on the display. The user interface control module 250 receives and/or sends electrical signals from/to the touch-sensitive display or receives signals from the user input device. The display is arranged to display different visual outputs including for instance graphics elements, text elements, video or a combination of these.

The display may be divided into different areas for different types of interaction with the user, some parts may be for input from the user and other parts may be for outputting visual information to the user. Some areas of the display may be combined for input and output. The pointer may change appearance and functions depending on the location on the display and in which part of the display the pointer currently is located.

In Fig. 4a, a selection area 410 is shown, where the user can move a pointer 420 and aim towards particular object or objects. Depending on where the pointer is on the display it may change appearance. In the example shown in Fig. 4 the pointer changes to a sniper scope-like symbol with a circular area and a cross hair symbol for facilitating selection of an object when in the object selection area. It should be noted that some other type of sniper-like symbol may be used, for instance just a cross-hair symbol or some other focus area depicting symbol. In the selection area a video stream provided by the server device is shown, the video stream showing a recording of the remote display; it should be noted that the recording can be transmitted in real-time during the recording or transmitted at a later time from a stored file of the recording. On the remote display a number of objects 405 are shown and the user can select one or several objects by directing the sniper scope pointer over an object and making a selection event by hard pressing or tapping on the display, pressing a mouse button, pressing on the trackpad or similarly creating an event signal when the sniper scope pointer is located over one or several objects. The sniper scope pointer is overlaid over the video stream and the area in the circular area is a virtual rendering of the video stream image under the pointer symbol. The virtual rendering may be done in the user electronic device by analysing the image and determining the image synchronized with the selection area. Furthermore, the server device 103 may provide the user electronic device 101 with information about the objects on the remote display, e.g. type of object, location of each object in coordinates of the remote display, any reward associated with each object and so on. However, the information provided about the objects may be encrypted so the user will not be able to determine the information but it is only made known to the software running the program for selecting the objects; the software can use the information about the objects in rendering the objects virtually and synchronizing the location of the objects and the sniper scope pointer. By providing a virtual rendering of the video stream image under the pointer symbol it is possible to within the sniper scope focus area zoom in and out and provide a more accurate aim for the user. Furthermore, the use of a sniper scope-like pointer provide the user with an intuitive interaction that it is possible to zoom in on the particular area under the sniper scope pointer and/or that the user may shoot the object. The zoom function may be triggered for instance by pressing a specific key on a keyboard, pressing or tapping at a particular position on the display or trackpad, or hard pressing on the touch sensitive display at the location of the focus area (sniper scope pointer), or the zoom function be automatically turned on when using the sniper scope pointer.

The virtual rendering may be obtained in the user electronic device by analysing the video stream and keeping track of the position of the user pointer in relation to the video stream. For instance the electronic device may determine a specific x and y coordinate of the user pointer in the remote display window and then determine image data of the video stream for the same coordinate and of an area around that coordinate that corresponds to the focus area/pointer area. The electronic device then calculates a virtual rendering of the video stream data of that area and displays this in the focus area of the sniper scope. The user electronic device can enlarge, i.e. zoom in, into the area and show an enlarged image in the focus area of the sniper scope.

Successfully selecting an object may trigger a signal response internally in the user electronic device or send information to the server device and the signal may include information about which of the objects was selected and the user device or server device in turn may trigger a function in response. The server may provide information that a particular object has been successfully selected to the remote display control device that in turn will trigger a response to the remote display, e.g. by changing the appearance of the selected object. The user electronic device may be provided with information about the objects on the remote display, e.g. type of object, location of each object in coordinates of the remote display, any reward associated with each object and so on from the server device. This information may be used for the virtual rendering of the data in the sniper scope.

For instance, the system may be used for playing a game or perform a task where the user is to select a cash prize or some other type of reward.

In one exemplary embodiment, the user is playing a game on a web browser or a stand-alone application on the user electronic device and if the user wins a particular game or successfully completes a task, the user may be given the opportunity to select an object 405 with an undisclosed prize/reward associated with the object. The cash/reward can be randomly selected using a random number generator (RNG) operated in the server device 103 or some other device 110 on the operator side of the system. If the user successfully aims and hits an object by aiming using the sniper scope and inputting a user event at a correct location of the display, such as tap pressing on the touch-sensitive display or clicking with a mouse button, that particular object is selected and the user wins a prize. In Fig. 4a a number of symbols representing ducks, rabbits, stars, and cactus are and shown and the user is invited to shoot any of the objects shown in order to acquire the reward. The type of symbol may also be generated from a pool of symbols using an RNG. If a user successfully shoots an object, the symbol changes in some suitable manner to inform the user of being successful. The changing of symbol may for instance be an animation of the object falling off the display board and/or transforming into another symbol. The prize/reward may for instance be a cash prize or some other type of reward. In one embodiment the selected object, the duck 420 in the example of Fig. 4a, is changed into a symbol relating to the reward, for instance as shown in Fig. 4b, where the selected object is changed into a cash multiplication symbol x10 420', i.e. any cash associated with the user and the particular game is multiplied with that multiplier. The user interface may alternatively or in combination in other ways inform the user of the outcome of the shot/selection, for instance, but not limited to, by updating other information fields on the display, change colour of a background, chnge colour of the object, update a cash register with an increase relating to obtained reward, and so on.

The objects in the remote display can be made non-stationary, for instance they may float around in a random manner or in a systematic manner (for instance moving between two positions back and forth for each line of objects) when the user tries to select the objects, thus even further enhancing the user experience by providing an increased level of difficulty in selecting the objects. The level of movement can optionally be related to the successfulness of the previous task completed, for instance if the previous task was completed with high success, the movement can be slower thus increasing the users chance of hitting or successfully selecting an object, or if the previous task was completed with a lower success, the movement can be more rapid and/or random to reflect this outcome and thus decreasing the users chance of hitting/selecting an object.

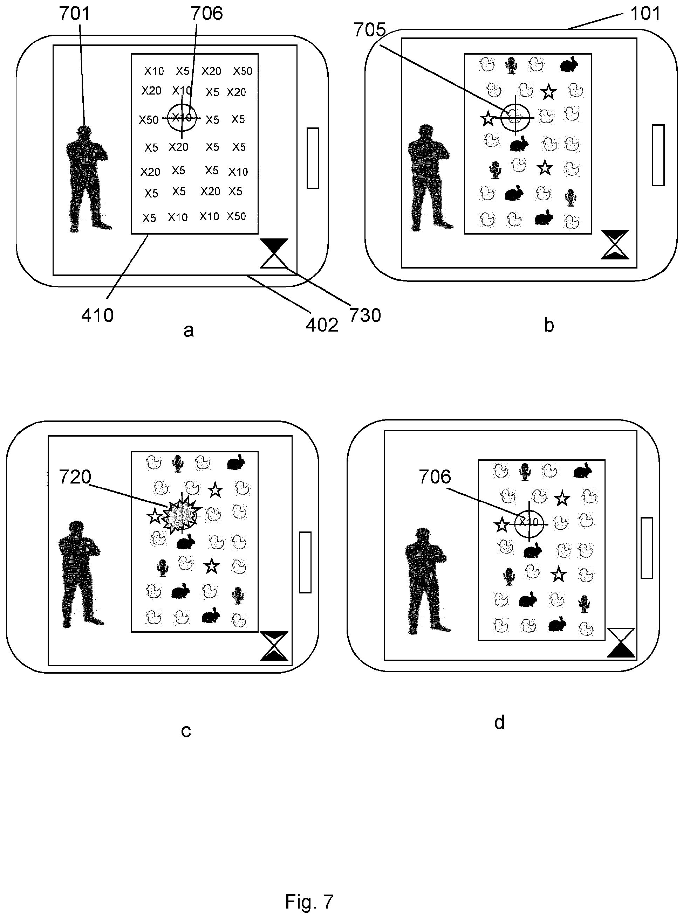

In one embodiment, the user is briefly presented with the cash or reward symbols for each object and then the symbols are changed to anonymous symbols, e.g. ducks, rabbits, cactus, and stars as shown in Fig. 4. The objects may then start to move around in a random manner or some systematic manner and the user thus has the opportunity to try to remember where a larger cash prize or higher valued reward is located and try to select that particular object. This will be discussed in more detail in relation to Fig. 7.

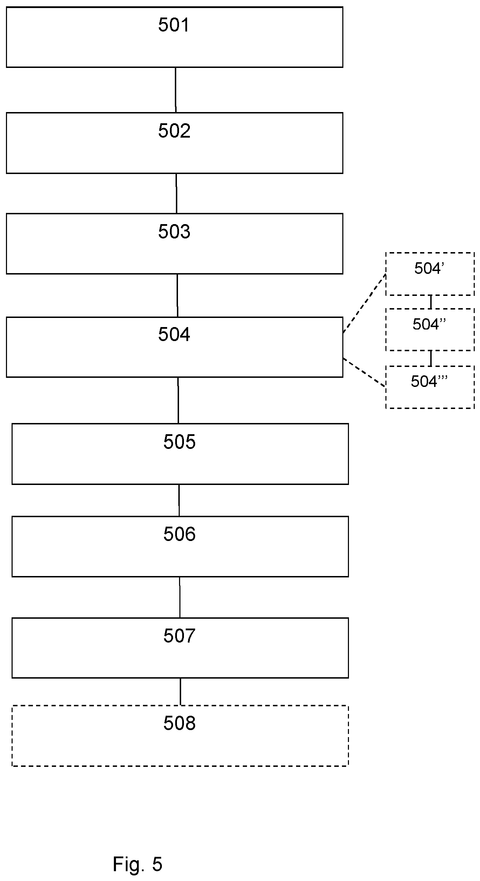

Now, referring to Fig. 5, the proposed solution is implemented in functional steps as a method for selecting objects displayed on a remote display. In one embodiment, the method is implemented at a user electronic device having one or more processors, at least one memory, user display, and at least one user input device providing user input coordinates and events as discussed above.

The user electronic device is arranged to operate functionality as method steps in instruction sets and software code executed in the processor for performing the proposed solution. In a first step, the device is arranged to display 501 a video stream of the remote display in a remote display window 410 on the user electronic device display 402. It should be noted that the video stream as shown in the user display may be arranged to cover an entire remote display or only a part of the remote display and the user electronic device may be arranged to zoom and pan over the remote display.

The user electronic device is furthermore arranged to detect 502 a user interface input coordinate, for instance a finger moving on a touch-sensitive display or a mouse moving in the display 402 will provide continuous coordinates of the current position of the pointer associated with the input coordinate. If the user input coordinate is located in the remote display window, displaying a user selection affordance comprising a focus area overlaid over the video stream and following the movement of the user input coordinates. The focus area may optionally be designed as a virtual sniper scope-like function and appearance.

The device obtains 503 a position of the focus area, e.g. in the form of a sniper scope, in relation to the video stream area, i.e. synchronizes the position of the pointer and the video stream and in particular to the part of the video stream that covers the remote display. Synchronization may be performed by for instance analysing the video stream data and identifying objects and locations or (continuously) obtain information from the server relating to type of objects and locations of objects. The device may continuously obtain positions of the focus area as the user moves the pointer (focus area) in time. If the pointer is moved outside or inside the remote display window, the appearance of the pointer may change; for instance when moving into the remote display window the appearance may change into the sniper scope design and when moving out from the remote display window the pointer may change into a default design such as an arrow or similar appearance.

The device further displays 504 in the focus area a virtual rendering of the remote display corresponding to the area under the focus area. With a virtual rendering of the remote display corresponding to the area under the focus area, it is possible to provide, in the focus area, an enlarged rendering, thus mimicking a zoom functionality and a telescoping appearance enhancing the ability to aim for the user. Furthermore, virtually rendering the remote screen in the focus area provides with the possibility to provide the video stream to a plurality of users and each user will only see what he or she selects. In relation to step 504, the user electronic device may be arranged to optionally analyse 504' the video stream, determining 504" image data related to the current position of the focus area, and creating 504‴ the virtual rendering of the remote display corresponding to the area under the focus area.

During operation the user electronic device receives 505 a user selection event from the user input device. Such a user selection event comprise for instance, but not limited to, a hard press on the touch-sensitive display, quick tap on the touch-sensitive display, a mouse click on a mouse button, a tap on a trackpad, a key stroke on a keyboard, and so on. The user may be provided with a time period during which it is possible to select an object, this time period may be illustrated in the user interface by some type of time period indicator 730, e.g. as depicted in Fig. 7.

When detecting a user selection event in the remote display window, the electronic device determines 506 the current location of the focus area in relation to the video stream, and if an object is located at the current location of the focus area, selecting 507 the object displayed at the current location of the video stream and focus area. In some embodiments, the objects are non-stationary in the video stream in order to increase the difficulty to select an object for a richer user experience.

Optionally, If an object has been successfully selected, the user may be presented 508 a reward. This can be done by changing the appearance of the object to a symbol representing the reward, for instance for a cash reward the amount won may be shown in the symbol, see for instance Figs. 4a and 4b. Furthermore, in case of a cash reward the cash may be transferred to a digital wallet of the user so the user at a later stage may withdraw the cash.

In accordance with some embodiments, a computer readable storage medium has stored therein instructions which when executed by an electronic device with a display, and a user input device may cause the device to perform or cause performance of the operations of any of the methods described herein.

It should be understood that at least parts of the solution may be arranged at the server side of the system, for instance, the user electronic device may be arranged to only provide a current location of the pointer relative the remote display information and the server may be arranged to determine if an object has been successfully selected and change the appearance of the object as discussed above. This also applies to other functionality such as virtual rendering of area in the focus area and so on.

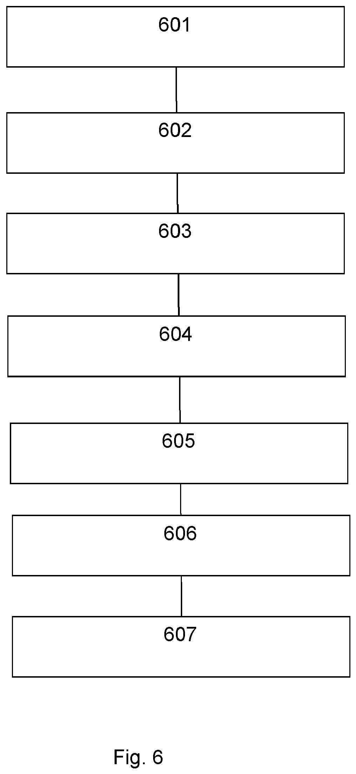

Referring to Fig. 6, for a server-side solution, the server 105 is arranged to obtain 601 a video stream from the camera recording the remote display and to transmit 602 the video stream to at least one user electronic device 101 using same communication link as discussed previously for the user side solution. Furthermore, the server is arranged to receive 603 sniper scope coordinates and to synchronize 604 these coordinates with image data of the video stream and provide the user electronic device with data for the virtual rendering in the focus area. The server is further arranged to receive 605 a selection event with selection coordinates from the user electronic device and to determine 606 if there is an object located at the same coordinate location in the corresponding video stream. However, in this case the server preferably also obtain information about the type, model and software installed on the user electronic device in order to properly determine a synchronized location. If there is an object located at the selected coordinate, the server program alerts 607 the user of a successful selection and transfers a reward to the users account. The alert may comprise changing the symbol of the object as discussed earlier in this document.

In Fig. 7, an embodiment of steps for selecting objects or playing a game are shown. For instance when a user has successfully completed a task or won a prize in a game, he/she can be presented with the option of performing a cash hunt or reward hunt by entering into an application according to the present solution. In one embodiment, the user is presented with a play area in at least part of the display 402 of the user electronic device 101. The play area in this case comprise a video stream of a remote studio with a physical person 701 operating a remote display 410. The remote display is arranged to operate some type of game. The play area may further comprise a time period indicator 730, e.g. in the form of an hour glass, a timer, a clock, a linear or round indicator filling up as time passes. In this example, as seen in Fig. 7a, the remote display first shows a number of cash multipliers 706 depicting possible wins to be selected. This presentation last for a few seconds or similar and then the display transforms so the cash multipliers are replaced by different anonymous symbols 705 as seen in Fig. 7b. Optionally, in an intermediate step, the symbols are scrambled around or moved around in some random or systematic manner in order to make it more difficult for the user to remember the exact location of each cash multiplier. During the selection period, the symbols may be stationary or non-stationary. The user then has the opportunity, for a period of time (e.g. a few seconds to some 10 or 20 seconds or longer), to select an object by operating the pointer which when in the area of the remote display 410 changes into a focus area (in this example in form of a sniper scope) and operating a selection event, such a mouse click, tap on touch-sensitive screen and so on. When this selection event occurs the user electronic device 101 determines the position coordinates of the selection event and synchronizes this with the coordinates of the symbols and alerts the user that a successful selection has taken place; in this example, a splash 720 symbol is placed on the object to indicate the selection. After the selection time has ended, in a next step, as seen in Fig. 7d, the display changes the anonymous symbol of the selection into a corresponding cash multiplier, alternatively all anonymous symbols change into corresponding cash multiplier symbols at the same time. The splash symbol may be kept in place in the display for some time after the cash multiplier has been revealed in order to facilitate for the user to remember which object that he/she selected and what the reward was. In order to serve a plurality of users and/or individual functionality for a user, the video stream provide a background to the application but during the selection period, the part of the user display that corresponds to the remote display 410 is rendered locally or at least part of that is rendered; for instance, the part of the display that are within the focus area, in this case the sniper scope, is rendered locally in the user electronic device and when the selection has been performed also the splash symbol 720 is rendered locally.

To further increase the human-machine interaction, the remote display can be changed so all the symbols in the display are shown as grey-scale symbols during the selection period, whereas otherwise they are shown in colour. During the selection period, the rendered image in the sniper scope can be showing symbols in colour reducing the cognitive burden on the user and enhancing the human-machine interaction.

The user electronic device may further be arranged to determine the selected cash multiplier and send this information to the server and/or to update a cash wallet locally. It should be noted that other types of rewards than cash may be used, for instance product rewards, extra time for playing and so on.

The use of the object selection solution as presented herein may be used for other areas then casino gaming solutions. Such tasks may be connected to many different areas of interest including but not limited to repetitive computer related tasks, responding to surveys, or other tasks that benefit from a more motivated user. By gamifying a task, the user is more interested in performing the task and can potentially be more efficient in performing such tasks. The suggested solution according to the present invention provides an effective way of gamifying tasks and providing an efficient human-machine interaction functionality. This in turn may also reduce the risk of the user making mistakes on operating the user electronic device and be more efficient in general relating to tasks on the device; this may reduce the computational need of the device and reduce the power consumption increasing the time between charging in case the user device is a battery operated device.

User Interface elements are responsible for interaction with user. Video stream is delivering rich visual experience. Some elements/zones of the video stream are visually matching User interface elements that creates feeling of something solid and whole.

Solution can be used for live game streaming, for instance as a web-based application. UI elements are being shown as second layer, overlaid above the video stream. UI visually copies graphics that is shown in video stream, and allow user to interact with it to accomplish game related activities.

Proposed solution allows to dramatically save space on the screen of user's device, by matching UI layer over the visual (video stream) layer, which is extremely important nowadays for mobile devices. In the same time, solution creates virtual experience for user, by giving him a feeling that user interacts with the physical (studio based) elements, being streamed through the video.

The proposed solution uses different techniques to allow configuration and camera installation process easy.

Preferably, having the user electronic device handle the processing of the video stream and the user affordance provides a faster and more realistic user experience.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent embodiments should be apparent for the person skilled in the art. The scope of the present invention is defined by the claims.

### Abbreviations

- RNG: Random Number Generator
- UI: User Interface
- GUI: Graphical User Interface
- CMOS: Complementary metal-oxide-semiconductor
- CCD: Charge-coupled Device
- DSLR: Digital Single-lens reflex (camera)

## Claims

1. A method for selecting objects (405) displayed on a remote display (105), comprising:
at a user electronic device (101) having one or more processors (201), at least one memory (202), user display (402), and at least one user input device (402) providing user input coordinates and events:
- displaying (501) a video stream of the remote display (105) in a remote display window (410) on the user display (402);
- detecting (502) a user interface input coordinate and if the user input coordinate is located in the remote display window, displaying a user selection affordance comprising a focus area (420) overlaid over the video stream;
- obtaining (503) a position of the focus area in relation to the video stream area;
- displaying (504) in the focus area a virtual rendering of the remote display corresponding to the area under the focus area;
- receiving (505) a user selection event from the user input device;
- determining (506) the current location of the focus area in relation to the video stream; and
- if an object is located at the current location of the focus area, selecting (507) the object displayed on the remote display at the current location of the video stream.

2. The method according to claim 1, wherein the focus area is depicted as a virtual sniper scope.

3. The method according to claim 1, wherein only part of the remote display is displayed in the remote display window (410) of the electronic device.

4. The method according to claim 3, wherein the video stream of the remote display can be panned and/or zoomed in the remote display window in the electronic device.

5. The method according to any preceding claims, wherein the focus area display an enlarged portion of the remote display corresponding to the location of the focus area.

6. The method according to any preceding claims, wherein the electronic device is arranged to display a video stream that has been obtained by recording the remote display using an external video recording device.

7. The method according to any preceding claims, wherein the objects (405) are non-stationary in the video stream.

8. The method according to any preceding claims, further comprising a step of presenting (508) a reward when an object has been selected.

9. The method according to claim 8, wherein presenting the reward comprise changing the symbol of the object.

10. The method according to any preceding claims, further comprising receiving information about all objects on the remote screen from the server device (103).

11. The method according to claim 10, wherein the information about all objects comprise at least one of position, type of object, and reward associated with the object.

12. The method according to any preceding claims, further comprising steps in the user electronic device of analysing (504') the video stream, determining (504") image data related to the current position of the focus area, and creating (504‴) the virtual rendering of the remote display corresponding to the area under the focus area.

13. A computer readable storage medium storing one or more programs, the one or more programs comprising instruction sets which, when the one or more programs are executed by a computer, cause the computer to carry out the method according to claims 1 to 12.

14. A system for selecting objects at a remote display using a user electronic device (101), the system comprising
- a remote display (105) presenting objects (405) to be selected, the remote display located at a remote location from the user electronic device;
- a camera (104) recording a video stream of the remote display (105);
- a server (103) obtaining the video stream and providing the video stream to user electronic devices; and
- a user electronic device (101) comprising one or more processors (201), at least one memory (202), a communication interface (205), a display (402), and at least one user input device (402; and
wherein the processor of the user electronic device is arranged to operate instructions sets stored in the memory for displaying the video stream and detecting user input events from the at least one user input device, and further arranged to operate the method according to claims 1 to 12.

## Patentansprüche

1. Verfahren zum Auswählen von Objekten (405), die auf einer Fernanzeige (105) angezeigt werden, das umfasst:
Bereitstellen von Benutzereingabekoordinaten und -ereignissen auf einem elektronischen Benutzergerät (101) mit einem oder mehreren Prozessoren (201), mindestens einem Speicher (202), einer Benutzeranzeige (402) und mindestens einem Benutzereingabegerät (402):
- Anzeigen (501) eines Videostreams der Fernanzeige (105) in einem Fernanzeigefenster (410) auf der Benutzeranzeige (402);
- Erkennen (502) einer Benutzeroberflächeneingabekoordinate und, wenn sich die Benutzereingabekoordinate im Fernanzeigefenster befindet, Anzeigen einer Benutzerauswahlmöglichkeit, die einen auf den Videostream überlagerten Fokusbereich (420) umfasst;
- Erhalten (503) einer Position des Fokusbereichs in Bezug auf den Videostreambereich;
- Anzeigen (504) einer virtuellen Wiedergabe der Fernanzeige im Fokusbereich, die dem Bereich unter dem Fokusbereich entspricht;
- Empfangen (505) eines Benutzerauswahlereignisses vom Benutzereingabegerät;
- Bestimmen (506) des aktuellen Standorts des Fokusbereichs in Bezug auf den Videostream; und
- wenn sich ein Objekt an dem aktuellen Standort des Fokusbereichs befindet, Auswählen (507) des Objekts, das auf der Fernanzeige an dem aktuellen Standort des Videostreams angezeigt wird.

2. Verfahren nach Anspruch 1, wobei der Fokusbereich als virtuelles Scharfschützenzielfernrohr dargestellt ist.

3. Verfahren nach Anspruch 1, wobei nur ein Teil der Fernanzeige im Fernanzeigefenster (410) des elektronischen Geräts angezeigt wird.

4. Verfahren nach Anspruch 3, wobei der Videostream der Fernanzeige im Fernanzeigefenster auf dem elektronischen Gerät geschwenkt und/oder gezoomt werden kann.

5. Verfahren nach einem vorstehenden Anspruch, wobei der Fokusbereich einen vergrößerten Abschnitt der Fernanzeige anzeigt, der dem Standort des Fokusbereichs entspricht.

6. Verfahren nach einem vorstehenden Anspruch, wobei das elektronische Gerät so ausgelegt ist, dass es einen Videostream anzeigt, der durch Aufzeichnen der Fernanzeige unter Verwendung eines externen Videoaufzeichnungsgeräts erhalten wurde.

7. Verfahren nach einem vorstehenden Anspruch, wobei die Objekte (405) im Videostream nicht ortsfest sind.

8. Verfahren nach einem vorstehenden Anspruch, das ferner einen Schritt des Darstellens (508) eines Rewards umfasst, wenn ein Objekt ausgewählt wurde.

9. Verfahren nach Anspruch 8, wobei das Darstellen eines Rewards das Ändern des Symbols des Objekts umfasst.

10. Verfahren nach einem vorstehenden Anspruch, das ferner das Empfangen von Informationen über alle Objekte auf dem Fernbildschirm von dem Servergerät (103) umfasst.

11. Verfahren nach Anspruch 10, wobei die Informationen über alle Objekte mindestens eines von Position, Objekttyp und Reward umfassen, die mit dem Objekt verknüpft sind.

12. Verfahren nach einem vorstehenden Anspruch, das ferner Schritte des Analysierens (504') des Videostreams, des Bestimmens (504'') von Bilddaten in Bezug auf die aktuelle Position des Fokusbereichs und des Erzeugens (504‴) der virtuellen Wiedergabe der Fernanzeige entsprechend dem Bereich unter dem Fokusbereich auf dem elektronischen Benutzergerät umfasst.

13. Computerlesbares Speichermedium, auf dem ein oder mehrere Programme gespeichert sind, wobei das eine oder die mehreren Programme Anweisungssätze umfassen, die, wenn das eine oder die mehreren Programme von einem Computer ausgeführt werden, den Computer dazu veranlassen, das Verfahren nach den Ansprüchen 1 bis 12 durchzuführen.

14. System zur Auswahl von Objekten auf einer Fernanzeige unter Verwendung eines elektronischen Benutzergeräts (101), wobei das System umfasst
- eine Fernanzeige (105), die auszuwählende Objekte (405) darstellt, wobei die Fernanzeige sich an einem Ort fernab des elektronischen Benutzergeräts befindet;
- eine Kamera (104), die einen Videostream der Fernanzeige (105) aufzeichnet;
- einen Server (103), der den Videostream erhält und den Videostream an elektronische Benutzergeräte bereitstellt; und
- ein elektronisches Benutzergerät (101), das einen oder mehrere Prozessoren (201), mindestens einen Speicher (202), eine Kommunikationsschnittstelle (205), eine Anzeige (402) und mindestens ein Benutzereingabegerät (402 umfasst; und
wobei der Prozessor des elektronischen Benutzergeräts ausgelegt ist, um im Speicher gespeicherte Anweisungssätze zur Anzeige des Videostreams und zum Erkennen von Benutzereingabeereignissen von dem mindestens einen Benutzereingabegerät zu betreiben, und ferner ausgelegt ist, um das Verfahren nach den Ansprüchen 1 bis 12 auszuführen.

## Revendications

1. Procédé de sélection d'objets (405) affichés sur un affichage distant (105), comprenant :
au niveau d'un dispositif électronique utilisateur (101) comportant un ou plusieurs processeurs (201), au moins une mémoire (202), un affichage utilisateur (402) et au moins un dispositif d'entrée utilisateur (402) fournissant des coordonnées et des événements d'entrée utilisateur :
- l'affichage (501) d'un flux vidéo de l'affichage distant (105) dans une fenêtre d'affichage distant (410) sur l'affichage utilisateur (402) ;
- la détection (502) d'une coordonnée d'entrée d'interface utilisateur et si la coordonnée d'entrée utilisateur est située dans la fenêtre d'affichage distant, l'affichage d'une affordance de sélection utilisateur comprenant une zone de focalisation (420) superposée sur le flux vidéo ;
- l'obtention (503) d'une position de la zone de focalisation par rapport à la zone de flux vidéo ;
- l'affichage (504) dans la zone de focalisation d'un rendu virtuel de l'affichage distant correspondant à la zone sous la zone de focalisation ;
- la réception (505) d'un événement de sélection d'utilisateur provenant du dispositif d'entrée utilisateur ;
- la détermination (506) de l'emplacement actuel de la zone de focalisation par rapport au flux vidéo ; et
- si un objet est situé à l'emplacement actuel de la zone de focalisation, la sélection (507) de l'objet affiché sur l'affichage distant à l'emplacement actuel du flux vidéo.

2. Procédé selon la revendication 1, dans lequel la zone de focalisation est représentée comme une lunette de visée de tireur d'élite virtuelle.

3. Procédé selon la revendication 1, dans lequel seule une partie de l'affichage distant est affichée dans la fenêtre d'affichage distant (410) du dispositif électronique.

4. Procédé selon la revendication 3, dans lequel le flux vidéo de l'affichage distant peut être panoramique et/ou zoomé dans la fenêtre d'affichage distant dans le dispositif électronique.

5. Procédé selon l'une quelconque des revendications précédentes, dans lequel la zone de focalisation affiche une partie agrandie de l'affichage distant correspondant à l'emplacement de la zone de focalisation.

6. Procédé selon l'une quelconque des revendications précédentes, dans lequel le dispositif électronique est agencé pour afficher un flux vidéo qui a été obtenu en enregistrant l'affichage distant à l'aide d'un dispositif d'enregistrement vidéo externe.

7. Procédé selon l'une quelconque des revendications précédentes, dans lequel les objets (405) ne sont pas stationnaires dans le flux vidéo.

8. Procédé selon l'une quelconque des revendications précédentes, comprenant en outre une étape de présentation (508) d'une récompense lorsqu'un objet a été sélectionné.

9. Procédé selon la revendication 8, dans lequel la présentation de la récompense comprend le changement du symbole de l'objet.

10. Procédé selon l'une quelconque des revendications précédentes, comprenant en outre la réception d'informations sur tous les objets sur l'affichage distant à partir du dispositif serveur (103).

11. Procédé selon la revendication 10, dans lequel les informations sur tous les objets comprennent au moins l'un parmi la position, le type d'objet et la récompense associée à l'objet.

12. Procédé selon l'une quelconque des revendications précédentes, comprenant en outre des étapes dans le dispositif électronique utilisateur consistant à analyser (504') le flux vidéo, à déterminer (504'') des données d'image liées à la position actuelle de la zone de focalisation, et à créer (504''') le rendu virtuel de l'affichage distant correspondant à la zone sous la zone de focalisation.

13. Support de stockage lisible par ordinateur stockant un ou plusieurs programmes, les un ou plusieurs programmes comprenant des ensembles d'instructions qui, lorsque les un ou plusieurs programmes sont exécutés par un ordinateur, amènent l'ordinateur à réaliser le procédé selon les revendications 1 à 12.

14. Système de sélection d'objets sur un affichage distant à l'aide d'un dispositif électronique utilisateur (101), le système comprenant
- un affichage distant (105) présentant des objets (405) à sélectionner, l'affichage distant étant situé à un emplacement distant du dispositif électronique utilisateur ;
- une caméra (104) enregistrant un flux vidéo de l'affichage distant (105) ;
- un serveur (103) obtenant le flux vidéo et fournissant le flux vidéo aux dispositifs électroniques utilisateur ; et
- un dispositif électronique utilisateur (101) comprenant un ou plusieurs processeurs (201), au moins une mémoire (202), une interface de communication (205), un affichage (402) et au moins un dispositif d'entrée utilisateur (402) ; et
dans lequel le processeur du dispositif électronique utilisateur est agencé pour faire fonctionner des ensembles d'instructions stockés dans la mémoire pour afficher le flux vidéo et détecter des événements d'entrée utilisateur à partir de l'au moins un dispositif d'entrée utilisateur, et agencé en outre pour faire fonctionner le procédé selon les revendications 1 à 12.
